# EUROPEAN PATENT SPECIFICATION

(11) **EP 3 081 289 B1**
(45) Date of publication and mention of the grant of the patent: **19.06.2019**
(21) Application number: 14869529.9
(22) Date of filing: 10.12.2014
(51) Int. Cl.: B01J 19/08, F02M 27/06, C01B 13/11, F02M 25/025, F02B 47/02, F02B 47/06, F02B 47/10, F02M 25/10, F02M 25/12, F23L 7/00, F23Q 3/00

(54) **A COMBUSTION PROCESS FOR SOLID, LIQUID OR GASEOUS HYDROCARBON (HC) RAW MATERIALS IN A THERMAL ENGINE, THERMAL ENGINE AND SYSTEM FOR PRODUCING ENERGY FROM HYDROCARBON (HC) MATERIALS**
VERFAHREN ZUR VERBRENNUNG VON FESTEN, FLÜSSIGEN ODER GASFÖRMIGEN KOHLENWASSERSTOFFROHMATERIALIEN IN EINER WÄRMEKRAFTMASCHINE, WÄRMEKRAFTMASCHINE UND SYSTEM ZUR ENERGIEPRODUKTION AUS KOHLENWASSERSTOFFMATERIALIEN
PROCÉDÉ DE COMBUSTION DE MATIÈRES PREMIÈRES HYDROCARBONÉES (HC) SOLIDES, LIQUIDES OU GAZEUSES DANS UN MOTEUR THERMIQUE, MOTEUR THERMIQUE ET SYSTÈME DE PRODUCTION D'ÉNERGIE À PARTIR DE MATIÈRES HYDROCARBONÉES (HC)

(30) Priority: 11.12.2013 FR 1362395
(43) Date of publication of application: 19.10.2016
(73) Proprietor: See - Soluções, Energia E Meio Ambiente LTDA., Vila Alexandria 04635-050 São Paulo - SP (BR)
(72) Inventor: GUYOMARC'H, Raymond, F-82300 Caussade (FR)
(74) Representative: Studio Torta S.p.A.
(86) International application number: PCT/BR2014/000435
(87) International publication number: WO 2015/085383

(56) References cited:
- BR-A2- PI0 619 662
- DE-A1- 4 315 034
- JP-A- 2007 120 397
- US-A1- 2004 144 338
- US-A1- 2005 016 507
- US-A1- 2005 126 550
- US-A1- 2008 105 239
- US-A1- 2009 133 675
- US-A1- 2011 247 596
- US-A1- 2012 318 245

## Description

The invention refers to a combustion process for hydrocarbon materials in a thermal engine. The invention also refers to a thermal engine implementing and operating said process and system for producing energy from hydrocarbon materials comprising such engine.

The field of invention is the field of treatment of solid, liquid and/or gaseous hydrocarbon materials, particularly diesel. The invention specifically relates to diesel combustion and generally to hydrocarbon materials in a thermal engine.

### State of the art

The large majority of the systems of the state of the art performs combustion of said hydrocarbon materials with atmospheric air as oxidizing agent.

Document JP2007120397 deals with an exhaust emission control device for an internal combustion engine capable of inhibiting deleterious change of exhaust emission by quickly eliminating fixing of an EGR valve and clogging of an EGR cooler. The control device has an ozone supply apparatus connected to an exhaust gas re-circulation (EGR) cooler and an EGR valve through EGR and ozone supply channels respectively. The ozone supply apparatus supplies ozone to the EGR valve and the EGR cooler.

Document DE4315034 describes a multistage method to operate two-stroke engine wherein enables engine to do mechanical work and to produce hydrogen. For operating said engine, water vapour is blown into a combusting mixture of fuel and oxygen.

Document US2004144338 describes a power generator which provides power with minimal CO2, NOx, CO, CH4, and particulate emissions and substantially greater efficiency as compared to traditional power generation techniques. Specifically nitrogen is removed from the combustion cycle, either being replaced by a noble gas as a working gas in a combustion engine. The noble gas is supplemented with oxygen and fuel, to provide a combustion environment substantially free of nitrogen or alternatively working in 100% oxygen-fuel combustion environments. Upon combustion, very little to no nitrogen is present, and thus there is little production of NOx compounds. Additionally, the exhaust constituents are used in the production of power through work exerted upon expansion of the exhaust products, and the exhaust products are separated into their constituents of noble gas, water and carbon dioxide. The carbon dioxide may be used in conjunction with a biomass to accelerate the biomass growth and to recover the oxygen enriched air resulting from algae photosynthesis for enhancing the operation of the power generator using the as Biomass for processing into methanol/ethanol and biological oils as fuel for the power generator. The biomass fuel is seen as a solar fuel and may be used in conjunctions with other solar fuels like heated thermal oil and others, as well as clean fossil fuels to optimize to clean, and efficient operation of the power generator in various regulatory contexts.

We know that atmospheric air is constituted by 21% oxygen and 78% nitrogen, the balance being rare gases, and only oxygen (O₂) is the reactive element of combustion. Nitrogen is a neutral gas, which serves as ballast gas fluid, a thermal fluid and/or work volume expansion in current systems. Said systems are dedicated to the production of thermal energy (boiler shells, etc.) or to a conversion into mechanical energy (thermal engines, turbines, etc.).

To perform a complete combustion with atmospheric air, the oxidizing agent should be supplied in excess relative to the quantity of reactive oxygen. This equation results in the generation of disproportionate combustion gas volumes over the gases effectively produced by complete combustion. Further, considerable combustion gas volumes generate large inconveniences, considerable atmospheric pollution and effects (heat, organic pollutants, CO₂, various oxides, aerosols, etc.) which neutralization is extremely difficult.

On the other hand, said large volumes of combustion gases become extremely costly means to be implemented to neutralize the generated pollution, especially the capture of CO₂, which is one of the main causes of global warming.

These excessive oxidizing agents also reduce the transffer efficiency of energy of fuel energy to the system, and they usually do not perform complete combustion.

On the other hand, incomplete combustion of hydrocarbon materials in the current systems causes dirt deposition of non-burnt material, thus reducing yield of the current systems over time.

The sum of these inconveniences reduces the thermodynamic yield of current thermal engines, rarely surpassing 50% of the heating power of the fuel used, thus meaning waste of more than half of the available energy. Furthermore, a large part of the thermal energy is dissipated by the cooling systems of the engines and exhaust gases. Usually, the "global" yield of thermal engines is lower than 45% of the Lower Heating Power (PCI) of the fuel used.

Other processes promote a combustion of hydrocarbon materials with pure or eventually mixed dioxygen with a neutral gas such as CO₂, e.g. like the process as disclosed by the document EP 2,383,450 A1. These proceedings enable to increase yield, reduce the quantity of pollutant particles and facilitate the capture of CO₂ from the combustion gas generated by the combustion.

However, it is still possible to increase combustion yield and improve combustion conditions to achieve a more respectful way of combustion, particularly the thermal engine wherein the combustion is performed.

One of the objects of the invention is to provide a combustion process of hydrocarbon materials in a thermal engine, so to allow for a better yield.

Another object of the present invention is to provide a combustion process of hydrocarbon materials in a thermal engine, which is more respectful than the thermal engine of the current processes.

### Description of the Invention

The invention enables to reach at least one of the objects as already explained, by means of a combustion process of solid, liquid or gaseous hydrocarbon materials in a thermal engine comprising at least one combustion chamber, said process comprising at least one interation of the following steps constituting a combustion cycle:
- introduction in said combustion chamber of a load of hydrocarbon materials and a oxidizing gaseous mixture; and
- triggering of combustion of said load of hydrocarbon materials with said oxidizing gaseous mixture;
wherein said oxidizing agent comprises solely:
- trioxygen (O₃); and
- carbon dioxide (CO₂) and/or carbon trioxide (CO₃).

As "hydrocarbon materials", we understand petroleum, petroleum derivatives, natural and synthetic petroleum gases, coals and/or biomass, as well as all residues containing carbon and/or hydrocarbon, and synthesis gases from decomposition and gasification of said hydrocarbon materials.

As oxygen, we understand the oxygen atom (O) which, in current formulations, composes the dioxygen molecule (O₂) and the trioxygen molecule (O₃), usually called "ozone".

As "thermal engine", we understand every device performing the combustion of hydrocarbon materials and producing mechanical or electric energy.

The process of the invention provides a combustion of hydrocarbon materials with an oxidizing gaseous mixture comprising trioxygen (O₃) and more particularly negative trioxygen (O₃⁻).

The use of trioxygen in the oxidizing gas allows for a better use of each oxygen (O) element and consequently a more complete combustion of hydrocarbon material.

In fact, as will be disclosed below, the use of trioxygen increases the flammability of hydrocarbon materials by destabilizing the cohesion of their molecules and by speeding up the oxidization of the atoms in their compositions.

Furthermore, due to the increase in the flammability of the hydrocarbon material by using trioxygen, the combustion of hydrocarbon material is facilitated in terms of temperature and/or pressure, preserving the thermal engine or means operating combustion.

Whichever is the embodiment of the process of the invention, trioxygen is dosed for each atom of fuel organic material (C and H) to have the number of oxygen (O) atoms as required for a stoichiometric combustion. Trioxygen present in the oxidizing gas (alone or mixed with dioxygen O₂), thermo-chemically interacts with fuel organic materials of multiple form:
Trioxygen reacts firstly with CO₂ in the oxidizing gaseous mixture according to the reaction:

CO₂ + O₃ ⇄ CO₃ + O₂ (1)

Subsequently, trioxygen reacts with the organic materials, which act with catalysts according to the reaction:

O₃ + catalyst → catalyst + O catalyst + O₂ (2)

Said interactive bonds are unstable and kept in the order of milliseconds during combustion.

If the oxidizing gas comprises carbon trioxide (CO₃), generated by the reaction (1), the latter instantaneously loses (during the combustion) its third O atom in the form of negative ion (O⁻), which is also immediately captured by a hydrocarbon fuel molecule. The same happens with trioxygen (O₃), from which the surplus oxygen atom is extracted and immediately fixed by an organic catalyst (C or H) of the hydrocarbon molecule, thus creating a free pathway for its parent molecule of O₂.

Said instantaneous and simultaneous interactions increase the flammability of catalyst fuels by destabilizing the cohesion of their molecules and speeding up the oxidization of atoms of their composition.

The integrity of oxygen available is the heart and the reaction agents. The combustion is complete, with maximum yield with the right measurement of oxygen.

With the process according to the invention, the lower flammability limit is optimized by factor 5 (five) and the speed of deflagration is doubled relative to atmospheric combustion. Oxidizing conditions make flammability conditions become instantaneous, as well as the thermal generation, thermal transmission and the expansion of the gas volume.

Providing for a complete combustion of hydrocarbon materials, thermal yield as obtained from the process according to the invention is better than that of the processes and/or engines of the state of the art. Furthermore, the thermal engine is not subject to the dirt deposition of non-burnt material, thus considerably increasing the working life of the system in comparison with the processes of the state of the art.

The combustion gas, as a result of the combustion, is composed only by CO₂ and H₂O, with eventual residual O₂ molecules. The CO₂ is the complete combustion carbon molecule, stable at high temperatures, above 800 °C. H₂O is the molecule resulting from the complete combustion of hydrogen from the molecular composition of the hydrocarbon material, said H₂O is easily recoverable by condensation, even at atmospheric pressure and temperature. Said two molecules are recyclable and allow recovering most of the dissipated energy of the combustion and reduce the ecological impact on the environment, thus eliminating gaseous pollutants, notably nitrogen oxides, which cannot exist in the absence of nitrogen.

On the other hand, the oxidizing gas has constant characteristics for any geographic or atmospheric variations (air humidity and altitude). Therefore, quantities can be precise and constant under any circumstances, so to provide for linear and permanently regulated combustion.

According to the invention, the load of hydrocarbon materials as required for the combustion can be mixed with at least one component of the oxidizing gas before being introduced into the combustion chamber, e.g. with CO₂ and/or CO₃, or even with pure O₃ or eventually with O₂.

The oxidizing gas can be injected in the combustion chamber before, after or simultaneously with the introduction of the load of hydrocarbon material into the combustion chamber.

CO₂ and/or CO₃ and pure O₃ or eventually mixed with O₂ can be separately injected in the combustion chamber, or all of them can be mixed together before the injection in the combustion chamber.

In the process according to the invention, the combustion can be performed with:
- applying a pressure in the combustion chamber;
   and/or
- supplying electrical energy to said combustion chamber;
e.g. with a spark plug as known by the expert in the art.

The process according to the invention can also comprise the injection of a quantity of liquid water in the combustion chamber before, after or simultaneously with the oxidizing gas. Therefore, up to 20% of water relative to the oxidizing gas and preferably between 5% and 20% of water relative to the oxidizing gas can be introduced into the combustion chamber as a function of the thermal regulation as scheduled or desired and the water expansion capacity into steam, which will replace its equivalent into CO₂ and/or CO₃.

The injection of water allows regulating the combustion temperature, since it absorbs a large quantity of energy from combustion into latent heat, thus reducing thermal losses caused by the dissipation in the cooling and combustion exhaust gas circuits. The injected liquid water represents a negligible volume ratio with the oxidizing gaseous mixture of less than 20% as a function of the size of the thermal system at issue. Once amidst the combustion medium, said water evaporates into overheated steam. The expansion of the volume of liquid water as converted into steam is more than 10 times to hundreds of times the value introduced as a function of the dynamic pressure as impinged.

Therefore, latent heat of evaporation is completely and immediately transformed into useful thermodynamic energy, instead of having a considerable part of it dissipated by the cooling and combustion gas exhaust circuits. The portion of injected water is limited by lowering the temperature caused by its evaporation and which should not be lower than the optimal operating temperature of the thermal system at issue. The volume of the portion of evaporated water replaces the equivalent volume of CO₂/CO₃.

The oxidizing gas can comprise between 15 and 25% of oxygen, in the form of pure O₃ or in the form of a mixture of O₃ and O₂, and between 85 and 75% of CO₂ and/or CO₃.

More particularly, the oxidizing gas can comprise between 18 and 22%, preferably 21% of oxygen in the form of pure O₃ or in the form of a mixture of O₃ and O₂, and between 82 and 78%, preferably 79%, of CO₂ and/or CO₃.

The oxidizing gas advantageously comprises, for a mole of carbon of hydrocarbon material, at least one mole of CO₂ and/or CO₃, and a maximum of 17 moles of CO₂ and/or CO₃.

The oxidizing gaseous mixture advantageously comprises, for one carbon atom of the hydrocarbon material, at least the equivalent to two oxygen atoms and a maximum of the equivalent to 102% of oxygen, in the form of pure O₃ or in the form of a mixture of O₃ and O₂.

The oxidizing gas can advantageously comprise for a hydrogen (H) atom in the hydrocarbon material, at least one oxygen atom in the form of pure O₃ or in the form of a mixture of O₃ and O₂, and a maximum of the equivalent to 102% of oxygen in the form of pure O₃ or in the form of a gas mixture of O₃ and O₂.

When the oxidizing gas comprises pure trioxygen, the latter be obtained from a pure O₃ reservoir/tank. When the oxidizing gas comprises trioxygen mixed with dioxygen, the mixture can be obtained either from a reservoir/tank containing a mixture of O₃ and O₂, or from a reservoir containing pure O₃ and a reservoir containing pure O₂.

Alternatively, the process according to the invention can also comprise a step of generation of trioxide from oxygen molecules, more particularly from dioxygen molecules (O₂), e. g. by the "CORONA" effect applied to the oxygen molecules , more particularly to dioxygen molecules .

For that purpose, the process according to the invention can implement a production mean of trioxygen (O₃).

Trioxide generating means can comprise a "CORONA" effect device, installed e.g. on a conduit in which oxygen (O₂) flows, such as the injection tube of dioxygen O₂ into the combustion chamber, to induce electric conversion discharges according to the formula:

O₂ + *hv* → O₂^{*} (³Σ*ᵤ*⁻)

(170 to 210 nm)

O₂^{*} + O₂ → O₃ + O, O + O₂ → O₃

The ratio of oxygen to be converted is defined by the intensity of the induced Corona effect, and the portion of O₃ can vary between 10 and 100% of the oxidizing oxygen as included in the gaseous oxidizing mixture.

Furthermore, the process according to the invention can comprise a step of generation of carbon trioxide CO₃ from CO or CO₂ molecules, and preferably from CO₂ molecules, e.g. by means of the "CORONA" effect applied to the CO₂ molecules in the presence of O₃/O₂.

According to a preferred embodiment, the oxidizing gas is obtained from a gaseous mixture of O₂ and CO₂, to which Corona effect is applied to generate O₃ and CO₃ molecules, the oxidizing gas therefore, obtained comprises:
- O₃; and
- CO₂ or CO₃ or a mixture of CO₂ and CO₃; and
eventually O₂, as a function of the energy of the electric discharges applied for the Corona effect.

As disclosed above, the combustion gas obtained after the combustion essentially comprises CO₂ and H₂O**ₛₜₑₐₘ**.

The process according to the invention can also comprise a recovery of CO₂ included in the combustion gas, by cooling said combustion gas.

When the combustion gas comprises H₂O molecules, steam can be previously removed from the combustion gas by condensation, and then, CO₂ and the latent heat from condensation can be recovered.

Advantageously, CO₂ can be condensed by any/all process known by the expert in the art. Therefore, all non-condensable material originated from the fuel and/or from the oxidizing gaseous mixture (metals, metalloids, sulfur, oxygen) are isolated from CO₂, which is pure in liquid stage, and can be stored and recycled in the process. CO₂ can be evaporated during the cooling process of the combustion gas before being re-injected into the combustion chamber for a new cycle.

Thermal energy (thermal capacity/sensitive and latent heat) of the combustion gas can also be recovered, by means of heat exchange with a thermal fluid with one or more heat exchangers, e. g. aiming to produce electricity with a turbine.

A part of CO₂ recovered from the combustion gas of a combustion cycle can be advantageously re-used in the oxidizing gas and/or to generate carbon trioxide as disclosed above, to perform a new combustion cycle.

A part of CO₂ recovered from the combustion gas can be re-used in a microalgae culture, e. g. in a microalgae reactor, wherein the microalgae culture provides O₂ by means of photosynthesis.

At least a part of O₂ provided by microalgae can be used in the oxidizing gas and/or to generate trioxygen as disclosed above, for a new combustion cycle.

According to another aspect of the invention, it is provided a thermal engine performing a combustion of hydrocarbon materials, and particularly organized means to operate all the steps of the combustion process according to the invention. The thermal engine according to the invention can comprise trioxygen generating means from oxygen atoms, more particularly from a gaseous flow of O₂.

Said carbon trioxide generating means can comprise means applying Corona effect with oxygen atoms, more particularly with a gaseous flow of O₂, such as e.g. a Corona effect tube disposed on a duct in which O₂ flows.

The thermal engine according to the invention can also comprise means to generate carbon trioxide from CO molecules or preferably from CO₂ molecules.

Said carbon trioxide generating means can comprise means to apply Corona effect on CO molecules or preferably on CO₂ molecules, such as e.g. a Corona effect tube disposed on the duct in which CO₂ flows in the presence of O₃/O₂.

The thermal engine according to the invention can further comprise at least one adjustment module for the:
- quantity of CO₂ and/or CO₃; and/or
- quantity of oxygen in the form of pure O₃ or a mixture of O₃ and O₂;
used in the oxidizing gas.

The thermal engine can also comprise at least one adjustment module of the quantity of liquid water introduced into the combustion chamber and eventually an adjustment module of the quantity of hydrocarbon materials for each combustion cycle.

According to another aspect of the invention, it is provided a vehicle with a thermal engine according to the invention to move the vehicle. Said vehicle can be e.g. a boat or a train.

According to another aspect of the invention, it is provided a system for producing mechanical or electrical energy from hydrocarbon materials, comprising:
- a thermal engine according to the invention, supplying a combustion gas comprising CO₂; and
- at least one microalgae reactor producing O₂ by photosynthesis;
- at least one means for feeding said reactor with at least a part of CO₂ present in said combustion gas; and
- at least one means for recovering at least a part of said O₂ produced by said microalgae reactor and reusing said recovered O₂ to generate trioxygen.

Other advantages and characteristics will emerge after examining the detailed description of non-limitative embodiments and the attached drawings, wherein:
- Figure 1 is a schematic representation of a first embodiment of a thermal engine according to the invention;
- Figure 2 is a schematic representation of a second embodiment of a thermal engine according to the invention; and
- Figure 3 is a schematic representation of a system to produce energy from hydrocarbon materials according to the invention, by embodying and operating the engine of Figure 2.

In the drawings, the elements common to several figures keep the same reference.

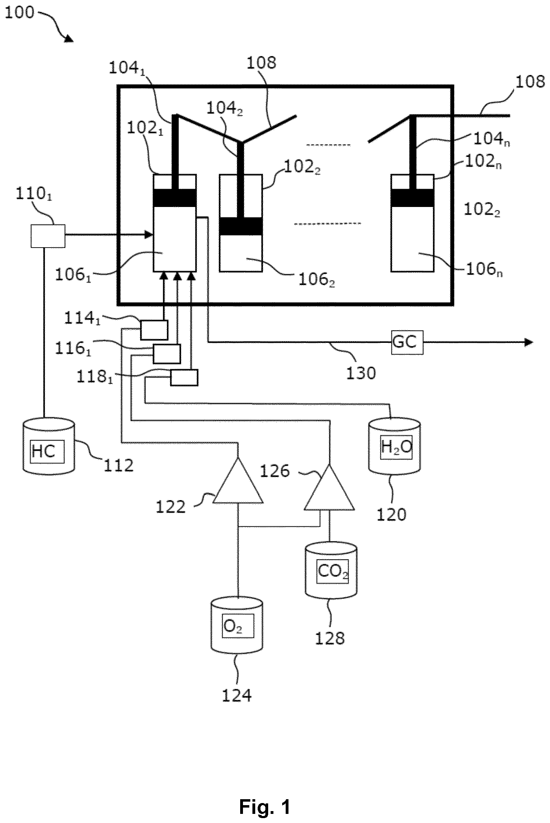

Figure 1 is a schematic representation of a first example of an engine according to the invention.

The engine 100 as represented by Figure 1 comprises, in a similar way to thermal engines currently known, a plurality of cylinders 102₁, 102₂,..., 102ₙ. Each cylinder 102 comprises a piston, respectively referenced 104₁, 104₂,..., 104ₙ, mobile in translation and defining in each cylinder a combustion chamber 106₁, 106₂,..., 106ₙ. Each piston 104 is pushed in translation by the combustion in the combustion chamber, of a fuel product, allowing the rotation of a transmission shaft 108, as known in current thermal engines.

The engine 100 comprises, for each cylinder 102 and for each combustion cycle:
- a first module 110i, adjusting the quantity of hydrocarbon materials HC introduced into the combustion chamber 106, from a reservoir 112 of hydrocarbon materials;
- a second module 114ᵢ, dosing the quantity of oxygen introduced into the combustion chamber 106, in the form of pure O₃ or a mixture of O₃ and O₂;
- a third module 116**ᵢ**, dosing the quantity of pure CO₂, pure CO₃ or also CO₂ mixed with CO₃, introduced in the combustion chamber 106;
- a forth module 118**ᵢ**, dosing the quantity of liquid H₂O as introduced into the combustion chamber 106 from a H₂O reservoir 120.

The engine 100 also comprises a corona effect tube 122, located at the outlet of a reservoir of O₂ 124, allowing generating a gas flow constituted by pure O₃ or by a mixture of O₃ and O₂, from O₂ provided by the reservoir 124. The gas flow obtained downstream from the corona effect tube 124 (and constituted by pure O₃ or a mixture of O₃ and O₂) feeds the module 114**ᵢ** to regulate the quantity of oxygen, and then its injection into the combustion chamber 106**ᵢ**.

The engine 100 also comprises a corona effect tube 126, located at the outlet of a reservoir of CO₂ 128, allowing generating a gas flow composed by pure CO₃ or a mixture of CO₃ and CO₂, from a part of CO₂ provided by the reservoir 128 and from the O₂ provided by the reservoir 124. The gas flow obtained downstream from the corona effect tube 126 feeds the module 116ᵢ to regulate the quantity of CO₃ and CO₂, followed by its injection into the combustion chamber 106ᵢ.

Combustion of the mixture formed by the load of materials (hydrocarbons + oxidizing gas) is activated by the combustion chamber 106 or by pressure applied by the piston or by a spark plug (not shown), producing an electric spark in the combustion chamber.

The combustion gas obtained from the complete combustion of the load of hydrocarbon materials with oxygen entering the combustion chamber 106 is evacuated by an evacuation tube/conduit 130. The combustion gas GC is mainly constituted by CO₂. On one hand, the CO₂ admitted into the combustion chamber 106 through the module 116 and, on the other hand, CO₂ formed by the oxidization of carbon elements C present in hydrocarbon compounds by the O₃ compounds (and possibly O₂), and H₂O, on one side H₂O eventually admitted in the combustion chamber 106 by the module 118 and, on the other side, H₂O formed by the oxidization of the di-hydrogen elements H₂ present in the hydrocarbon compounds.

It is possible that the combustion gas GC includes residual compounds of O₂, e.g. in a ratio of 1 or 2% of combustion gas, excessively admitted in the combustion chamber 106 to assure complete combustion of the load of hydrocarbon materials HC in the combustion chamber 106.

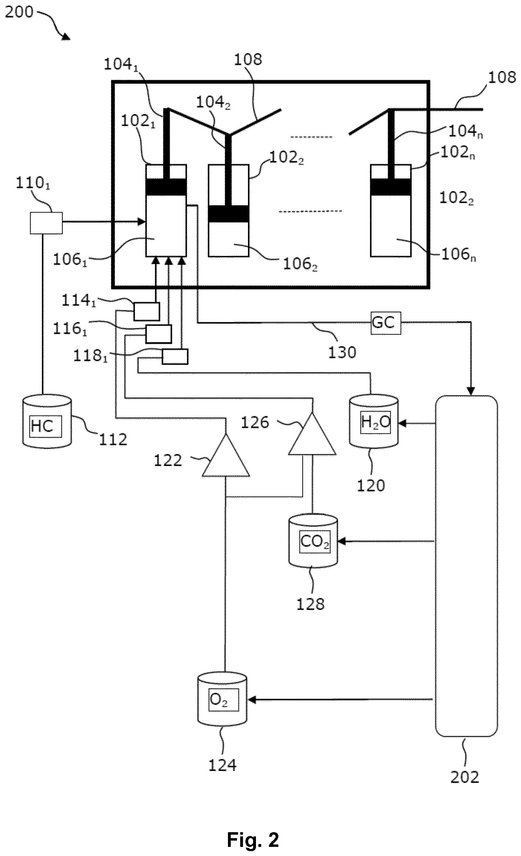

Figure 2 is the schematic representation of a second embodiment of an engine according to the invention.

The engine 200 as represented by Figure 2 resumes all the elements and configuration of engine 100 of Figure 1.

Besides the engine 100 of Figure 1, the engine 200 comprises a treatment module 202 of the combustion gas GC installed in the extraction conduit 130 for combustion gases.

The treatment module comprises a thermal exchanger (not shown) performing a thermal exchange between the combustion gas GC to take the combustion gas GC to a temperature lower than 100 °C so to condensate H₂O steam contained in the combustion gas GC. Therefore, the steam found in the combustion gas GC is isolated and feeds the water reservoir 120 to be re-used in the next combustion cycle.

When the combustion gas GC includes residual O₂, the latter one, which is not condensable at the condensation temperature of CO₂, is isolated by means of CO₂ condensation and feeds the reservoir of O₂ 124 to be re-used in the next combustion cycle.

Finally, after separating steam from O₂, the combustion gas GC only contains CO₂ feeding the reservoir 128 of CO₂ to be re-used in the next combustion cycle.

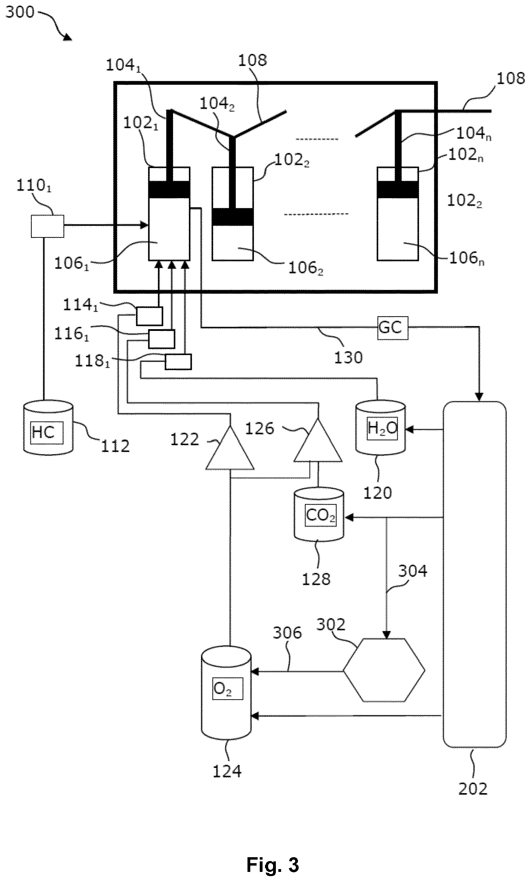

Figure 3 is a schematic representation of a system for producing energy from hydrocarbon materials according to the invention, by operating the engine of Figure 2.

The system 300 for producing energy of Figure 3 comprises the thermal engine 200 of Figure 2.

Besides the thermal engine of Figure 2, the system 300 comprises a microalgae reactor 302, receiving, through a conduit 304, a part of CO₂ extracted from the combustion gas GC by means of the module 202. Said microalgae reactor 302 produces O₂ by photosynthesis. A conduit 306 captures O₂ produced by the microalgae reactor 302 for feeding the reservoir of O₂ 124 for use in a next combustion cycle.

In all the examples disclosed, the invention allows to produce mechanical energy by rotating the shaft 108.

Said mechanical energy can, for instance, be used to move a vehicle on the ground, in the air or water, such as a boat. In this case, the thermal engine can be, as a non-limitative example, a diesel engine fed by a petroleum derivative such as heavy fuel oil.

Mechanical energy can also be used to generate electric energy, e.g. with an electric generator moved by an engine and/or gas turbine and/or liquid hydrocarbons and in combination with a steam turbine alternator.

In all the examples disclosed, modules 110, 114, 116 and 118 can be configured to introduce in the combustion chamber 106, respectively, a predetermined quantity of hydrocarbon materials HC, oxygen in the form of pure O₃ or mixed with O₂, CO₂/CO₃ and liquid water, said quantities being determined in accordance to, on one hand the quantity of carbon C and hydrogen H molecules present in the load of hydrocarbon materials admitted into the combustion chamber, so that the load of hydrocarbon materials suffers a complete combustion, i. e. a complete oxidization, and, on the other hand, the size of the cylinder 102 and piston 104 and the desired power at the engine output.

Each one of the modules 110, 114-118 can be an electronic module controlled by computer.

In all the examples disclosed, each combustion element is separately admitted into the combustion chamber 106. Consequently, it is also possible to mix at least two elements of combustion before admission into the combustion chamber 106 and submit them to thermal and/or mechanical treatment, e.g. compression.

In all disclosed cases, each combustion element can suffer thermal treatment or compression before being admitted into the combustion chamber.

In the examples described, the corona effect tube 126 is optional and the oxidizing gas may not contain CO₃.

Alternatively, one single corona effect tube can be used instead of tubes 122 and 126. In this case, the O₂ provided by the reservoir 124 is mixed with the CO₂ provided by the reservoir 128, after the gaseous mixture O₂+CO₂ is transported by one single corona effect tube.

We now describe a combustion of hydrocarbon materials according to the invention, when the hydrocarbon material is solely constituted of hexadecane with the formula C₁₆H₃₄, in comparison with a combustion under atmospheric air.

The table below shows the characteristics of hexadecane C₁₆H₃₄:

| **Characteristics of hexadecane molecule (Cethane) C₁₆H₃₄ (ratio per kg)** | | | | | |
|---|---|---|---|---|---|
| | molar mass | | = 226.44 g/mol | | =4.42 moles/kg |
| | | | PCS | oxygen (O₂) useful for complete combustion (stoichiometric) | |
| **C₁₆** | C=70.66 moles/kg | | CO₂ : 394 kJ/mol | oxygen O₂ | =70.66 moles/kg |
| | | | **=27 839.36 kJ/kg** | | |
| **H₃₄** | H₂=75.075 moles/kg | | H₂O : 242 kJ/mol | oxygen O₂ | =37.54 moles/kg |
| | | | **=18 168.01 kJ/kg** = | | |
| Total | | | **=46 007.37 kJ/kg** | Total | =108.20 moles/kg |
| | | | **=12.78 kWh/kg** | | |
| | | **Oxygen (O₂) p/ kg C₁₆H₃₄** | | | |
| molar mass: | | | =32.00 g/mol | **Total** | **=3.46 kg/kg** |
| | | | | | **=2.425 Nm3/kg** |

Wherein it describes that:
- 1 kg of hexadecane has a higher heating value (PCS) of 12.78 kWh and a lower heating power (PCI) of 11.48 kWh ≈ -9%;
- The complete oxidization of 1 mole of carbon in 1 mole of CO₂ generates an exothermic reaction of 394 kilojoules, while the incomplete oxidization of 1 mole of carbon into 1 mole of CO only generates an exothermic reaction of 111 kilojoules, i. e. 3.55 times less;
- Each particle is carbon and each gram of carbon can generate 32.83 kilojoules of thermal energy with 1 mole of carbon = 12 g.

The "thermodynamic" yield of an explosion engine, with controlled ignition or compression Otto or Diesel is relative to the combustion yield and the transfer from thermal energy to mechanical energy.

The present invention optimizes combustion yield and, consequently to reduce fuel consumption, for identical energetic product.

Combustion at "atmospheric" air depends on atmospheric (humidity) and geographic factors (altitude, oxygen-poor air). In Diesel engines, at constant volumes, the quantity of oxidizing air is constant and must be oversized to offer the best combustion. The quantity of interactive oxygen in air is not higher than 65% of 21% of oxygen existent in the air, at sea level. To reach the oxygen of the stoichiometric combustion, we need to double the volume of oxidizing air. The volume of combustion air interacts with the combustion providing active oxygen, but, on the other hand, increasing the volume of neutral gas (nitrogen), which acts in the opposite direction reducing the combustion zones since it takes space.

One of the advantages of the process, according to the invention is that the trioxygen molecule can be produced on the site of its use with several possibilities of quantitative and qualitative regulation.

Another advantage of the process, according to the invention is that the trioxygen molecule is unstable and it immediately interacts with its medium, provided that it contains "catalyst" organic materials or that its electric polarity (negative/positive) is opposed to that applied to the ozone. The prime interaction between trioxygen with the carbon dioxide molecule in the gaseous oxidizing mixture, before its injection in the combustion chamber, generates carbon trioxide (CO₃). The binding of the third oxygen atom and the CO₂ molecule is very unstable. Any proximity with an organic material causes the catalytic reaction of transferring said atom to the organic material; the capture of said oxygen atom, actives the destabilization of the catalyst molecule. Said partial oxidization makes the compounds of the organic molecule more oxidative and more flammable.

The gaseous oxidizing mixture (O₂/O₃ + CO₂/CO₃) interacts directly with the fuel.

The instability of the trioxygen bindings and their immediate capture by the organic catalysts create an "autogenous" pre-combustion of the fuel materials, oxygen then interacts directly with fuel under more favorable conditions than the usual combustion/oxidization, without the fact that being mixed with CO2/CO3 hampers this reaction, which is exothermal.

Another advantage of the process according to the invention is that the injection of water into the combustion chamber with the oxidizing gaseous mixture favors the distribution of the fuel front flame. In that highly exothermic medium and under temperatures above 1000 °C, CO₂/CO₃ and H₂O also interact directly with the fuel by means of a "redox" reaction, which helps distribute and speed up combustion.
∘ In atmospheric combustion, numerous carbon particles are not burned, thus hydrocarbon molecules, which have not been oxidized by the mixture of combustion air.
∘ In the process, according to the invention, atomic and molecular oxygen reacts directly with the fuel and decomposes the hydrocarbon molecule oxidizing C and H. At the same time, a "redox" reaction is activated by CO₂ and H₂O of the mixture, which also react with C and H of decomposed molecules of the following redox reactions:
   ▪ C + CO₂ ⇄ 2CO + 172 kJ/mol
   ▪ H₂ + CO₂ ⇄ H₂O+CO + 41 kJ/mol

These reactions are endothermal; they take part in the regulation of the temperature of the medium and reduce thermal dissipation. The reaction (C + CO₂ ⇄ 2CO) gasifies carbon structures and amorphous carbon elements (particles, soot) which would not be directly oxidized by O₂. Therefore, they are converted into gaseous molecules (CO) that are more reactive to complete oxidation (eminently more flammable because of their gaseous state, which causes CO molecules to have a better distribution in front of the flame(s) of the thermal system and by of the thermochemical conditions of the medium) in the presence of free oxygen:
- CO + O ⇄ CO₂ - 283 kJ/mol

Therefore, completion of combustion is progressive during the thrust (work) period of the engine pistons, which increases thermodynamic capacity for a same unit of fuel, improves the linear efficiency by distributing thermal effects throughout the course of said piston, and thus reduces wear due to thermal differentials, reducing global thermal dissipation.

The same thing happens to the H₂O molecule that react with CO according to:
▪ H₂O + CO ⇄ H₂ + CO₂ - 41 kJ/mol; and
▪ H₂ + O ⇄ H₂O - 242 kJ/mol.

Therefore, completion of combustion is progressive during the thrust (work) period of the engine pistons, increasing thermodynamic efficiency by homogenization of thermal distributions by these sequences of simultaneous exothermal reactions.

Another advantage of the process according to the invention is that the mixture of CO₂/oxygen does not generate pollution by nitrogen oxide, since nitrogen molecules are not present in the combustion.

In the present example, the fuel is hexadecane, of formula C₁₆H₃₄, the average density of this fuel is ≤1.

As disclosed on the table, to perform the stoichiometric combustion of 1 liter of hexadecane, 3.46 kg of oxygen (O₂) (2.425 Nm³) are required.

For atmospheric combustion with 50% efficiency yield with the characteristics of the current processes and engines, one must consider the volume of air as a function of the efficiency coefficient of separation O₂ from the nitrogen mixture, approximately 60/65%.

To reach the combustion yield of said engines, an excess of oxygen of at least 15% is required, i. e.:
- 3.98 kg or 2.79 Nm³ of O₂

Considering an efficiency coefficient of separation of O₂ of 65%:
- 2.79 / 65% = 4.29 Nm³ of O₂

Considering a 21% percentage of O₂ per m³ of air:
- 20.43 Nm³ of air per liter of hexadecane.

This combustion has only 50% of efficiency.

An engine is designed then in function of these parameters. Current engines work with a proportion of 1/5 of oxygen in the oxidizing mixture (the same ratio as in air).

The process according to the invention only requires an excess of O₂ between 2 and 5% for a combustion yield higher than 93%, i. e.:
- 3.57 kg or 2.50 Nm³ of O₂.

Since there is no constraint linked to the separation of the gaseous mixture, oxygen is totally active. Combustion yield is maximized.

Complete combustion of carbon generates CO₂ and 3.6 times more energy than that produced by incomplete combustion in CO:
- C+O = CO 111 kJ/mol
- C+O₂ = CO₂ 394 kJ/mol

This state of fact provides energy from a better expansion of the combustion gas.

CO₂ substitutes nitrogen as ballast gas for thermal gaseous expansion that supplies mechanical work pushing the piston.

At 800 °C, CO₂ has a dilatation coefficient 30% higher than air, thus requiring 23% less of the thermal capacity (heat sensitive).

From this, if we compare "atmospheric" values, transposed to O₂/CO₂, we have:
- 20.43 Nm³ of air per liter of hexadecane less oxidizing oxygen "2.425 Nm³ of O₂" (see table) = 18 Nm³ of ballast gas(nitrogen + rare gases):
   At 800 °C, said 18 Nm³ of ballast gas represent 48.021 m³ for a thermal capacity of 9.283 kWh. 1 kg of hexadecane has a lower heating power (PCI) of 11.48 kWh, thus representing combustion yield of 80.86%.
- 18 Nm³ of ballast gas CO₂:
   At 800 °C, said 18 Nm³ substituted by CO₂ expand into 62.654 m³ for a thermal capacity of 7.174 kWh.

About 15 m³ of exceeding "work" capacity.
- 1 kg of hexadecane has a lower heating power (PCI) of 11.48 kWh, which leave more than 4 kWh of exceeding thermal energy, i. e.:
   The capacity to generate about 35 m³ of CO₂ at 800°C, i. e., cumulated an exceeding total of 50 m³ of CO₂ at 800 °C.

Alternatively:
- 1 kg of hexadecane + 2.425 Nm³ of O₂ + 18 Nm³ of CO₂ produce two times more work capacity than 1 kg of hexadecane in atmospheric combustion.

Or also:
- ½ kg of hexadecane + 1.213 Nm³ of O₂ + 9 Nm³ of CO₂ produce the same work as 1 kg of hexadecane in atmospheric combustion.

Another example, 1 kg of hexadecane contains 70.66 moles of carbon (see table). The minimum CO₂ (to justify an ideal Boudouard reaction homogenizing the combustion) is 70.66 moles of CO₂, i. e. at least 1.6 Nm³ of CO₂ (approximately) and maximum of 27 m³ of CO₂ to exploit 95% of the lower heating power (PCI) of 1 kg of hexadecane: the value for a given engine depends on the type of engine, i. e. the engine cubic capacity, piston course , etc., this value being between these two numbers.

Additionally, a small part of the CO₂ ballast may be substituted by "liquid" water injected at the same time as O₂ and CO₂ of the gaseous oxidizing mixture.

This addition may happen in order to:
- regulate the combustion temperature absorbing a large quantity of energy in latent heat to transform it into dynamic energy by volume expansion of steam; and
- homogenize the combustion by the redox reaction which can occur during the change of state (liquid/ steam) if the H₂O molecule of steam is near a CO molecule . Said exothermal reaction releases a di-hydrogen (H₂) molecule in the medium that will react in any way with the oxygen of said medium, either with a free (O) atom or with an (O) atom of a trioxidized molecule.
- reduce thermal loss by dissipation, latent heat is recovered during steam condensation by the cold heat carrier (liquid and/or gaseous CO₂, oxygen, liquid water).

The process according to the invention reduces the wear of the equipment, maintenance; the whole combustion gas produced is recyclable:
- H₂O is condensable into distilled water;
- CO₂ is partially recycled for re-use in the process according to the invention; and
- excess CO₂ and H₂O can be recycled in a microalgae culture plant, which will then produce hydrocarbon materials and oxygen.

## Claims

1. Combustion process for solid, liquid or gaseous hydrocarbon (HC) raw materials in a thermal engine (100; 200) comprising at least one combustion chamber (106), said process comprising at least one iteration of the following steps constituting a combustion cycle by means of the introduction into said combustion chamber (106), of a load of hydrocarbon materials (HC) and an oxidizing gas, triggering the combustion of said load of hydrocarbon materials with said oxidizing gas, **characterized in that** the oxidizing gas comprises solely trioxygen (O₃) and carbon dioxide (CO₂) and/or carbon trioxide (CO₃).

2. Process according to claim 1, **characterized in that** the load of hydrocarbon (HC) materials is mixed with at least one component of the oxidizing gas before being introduced in the combustion chamber (106).

3. Process according to any of the preceding claims, **characterized in that** the combustion triggering of combustion is carried out by:
- applying a pressure in the combustion chamber (106); and/or
- supplying electrical energy to said combustion chamber (106).

4. Process according to any of the preceding claims, **characterized in that** the process further comprises an injection of a given quantity of liquid and/or gaseous water (H₂O) in the mixture.

5. Process according to any of the preceding claims, **characterized in that** the oxidizing gas comprises between 15 and 25% of oxygen, in the form of pure O₃, and between 85 and 75% of CO₂ and/or CO₃.

6. Process according to any of the preceding claims, **characterized in that** the oxidizing gas comprises, for one mole of carbon in the hydrocarbon material, at least one mole of CO₂ and/or CO₃ and a maximum of 17 moles of CO₂ and/or CO₃.

7. Process according to any of the preceding claims, **characterized by** comprising recovering of CO₂ present in the combustion gas (GC) obtained after combustion, by means of cooling of said combustion gas (GC), and the use of at least a part of CO₂ recovered from the combustion gas (GC), in the oxidizing gas for a new combustion cycle.

8. Process according to claim 7, **characterized by** comprising using a part of CO₂ recovered in the combustion gas (GC) in microalgae culture, said microalgae culture providing O₂ by means of photosynthesis, at least a part of said O₂ is used to obtain trioxide, containing the oxidizing gas for a new combustion cycle.

9. Process according to any of the preceding claims, **characterized by** comprising a step of generation of trioxide (O₃) and respectively carbon trioxide (CO₃), by means of the corona effect applied to the molecules of dioxygen (O₂) and respectively to the molecules of carbon dioxide (CO₂).

10. Thermal engine (100, 200) comprising a combustion chamber (106), **characterized in that** the thermal engine comprises means configured to carry out the combustion process according to any of claims 1 to 9, said thermal engine comprising at least one adjustment module (114, 116) for the:
- quantity of CO₂ and/or CO₃; and
- quantity of oxygen in the form of pure O₃;
used in an oxidizing gas,
said adjustment module being configured to iterate the following steps constituting a combustion cycle by means of the introduction into said combustion chamber (106), of a load of hydrocarbon materials (HC) and the oxidizing gas, triggering the combustion of said load of hydrocarbon materials with said oxidizing gas.

11. System (300) for producing energy from hydrocarbon (HC) materials, **characterized by** comprising:
- a thermal engine (100, 200) according to claim 10, providing a combustion gas (GC) comprising CO₂; and
- at least one microalgae reactor (302) producing O₂ by photosynthesis;
- at least one means (202, 304) for feeding said reactor (302) with at least a part of CO₂ present in said combustion gas (GC); and
- at least one means (306) for recovering at least one part of said O₂ produced by said microalgae reactor and re-using it to generate a part of the oxidizing gas.

## Patentansprüche

1. Verbrennungsverfahren für solide, flüssige oder gasige Rohstoffe aus Wasserstoff in einer Wärmekraftmaschine (100; 200), welche zumindest eine Brennkammer (106) umfasst, wobei das Verfahren mindestens eine Iteration der nachfolgend erwähnten Schritte umfasst, welche den Verbrennungszyklus mittels Einführung in die genannte Brennkammer (106), die Ladung von Materialen aus Kohlenwasserstoff (KW) und ein oxidierendes Gas darstellt, welche die Verbrennung der erwähnten Materialien mit erwähntem oxidierenden Gas ansteuert, **dadurch gekennzeichnet, dass** das oxidierendes Gas lediglich Ozon (O₃) und Kohlendioxid (CO₂) und/oder Kohlenstofftrioxid (CO₃) umfasst.

2. Verfahren gemäß Anspruch 1, **dadurch gekennzeichnet dass** die Ladung von Materialen aus Kohlenwasserstoff (KW) mit mindestens einer Komponente des oxidierenden Gases gemischt ist bevor es in die Brennkammer (106) eingeführt wird.

3. Verfahren gemäß irgendeinem der vorstehenden Ansprüche, **dadurch gekennzeichnet dass** die Verbrennung wie folgt durchgeführt wird:
- Anwendung des Druckes in der Brennkammer (106); und/order
- Versorgung von elektrischer Energie an erwähnte Brennkammer (106).

4. Verfahren gemäß irgendeinem der vorstehenden Ansprüche, **dadurch gekennzeichnet dass** das Verfahren zusätzlich eine Einspritzung von einer gewissen Flüssigkeit und/oder gasförmiges Wasser (H₂O) in der Mischung enthält.

5. Verfahren gemäß irgendeinem der vorstehenden Ansprüche, **dadurch gekennzeichnet dass** das oxidierendes Gas zwischen 15 und 25% Sauerstoff in der Form von reinem O₃, und zwischen 85 und 75% CO₂ und/oder CO₃ enthält.

6. Verfahren gemäß irgendeinem der vorstehenden Ansprüche, **dadurch gekennzeichnet dass** das oxidierende Gas für 1 Mol Kohlenstoff in dem Kohlenwasserstoff, mindestens ein Mol CO₂ und/oder CO₃, und maximal 17 Mol CO₂ und/oder CO₃ enthält.

7. Verfahren gemäß irgendeinem der vorstehenden Ansprüche, gekennzeichnet dass es das CO₂, welches im Brandgas (BG) enthalten ist, mittels Abkühlung des erwähnten Brandgases (BG), und durch die Mindestanwendung eines Teils des vom Brandgas (BG) gewonnen CO₂ in das oxidierende Gas für einen neuen Brennzyklus zurückgewinnt.

8. Verfahren gemäß Anspruch 7, **dadurch gekennzeichnet dass** es ein Teil des im Brandgas (BG) gewonnenen CO₂ in Mikroalgen anwendet, wobei erwähnte Mikroalgenkultur O₂ mittels Photosynthese besorgt, und mindestens ein Teil des erwähnten O₂ für den Erhalt von Kohlenstofftrioxid gebraucht wird, welches oxidierendes Gas für einen neuen Verbrennungszyklus enthält.

9. Verfahren gemäß irgendeinem der vorstehenden Ansprüche, **dadurch gekennzeichnet dass** es ein Schritt zur Erzeugung von Trioxid (O₃) und Kohlenstofftrioxid (CO₃) mittels der Corona-Wirkung welche an die Sauerstoffmolekülen (O₂) und respektiv an die Kohlendioxidmolekülen angewandt wird umfasst.

10. Wärmekraftmaschine (100, 200) umfassend einer Brennkammer (106), **dadurch gekennzeichnet dass** die Wärmekraftmaschine über Geräte zur Ausführung des Verbrennungsverfahrens gemäß einem der Ansprüche 1 bis 9 verfügt, wobei erwähnte Wärmekraftmaschine mindestens ein Einstellmodus (114, 116) für:
- die Menge an CO₂ und/oder CO₃; und
- die Menge an Sauerstoff in Form von reinen O₃;
aufweist, welches in einem oxidierenden Gas angewandt wird,
der erwähnte Einstellmodus entsprechend konfiguriert ist, um die nachfolgenden Schritte zu wiederholen und einen Verbrennungszyklus durch die Einführung in erwähnte Brennkammer (106) durch die Beladung von Kohlenwasserstoffmaterialien (KW) und des oxidierenden Gases zu bilden, und die Verbrennung mittels der Kohlenwasserstoffmaterialien mit erwähntem oxidierenden Gas auslösen.

11. System (300) für die Herstellung von Energie aus Kohlenwasserstoffmaterialien (KW) **gekennzeichnet durch** das Beinhalten von:
- einer Wärmekraftmaschine (100, 200) gemäß Anspruch 10, welche Brandgas (BG) aus CO₂ liefert; und
- mindestens einem Mikroalgenreaktor (302) der O₂ mittels Photosynthese besorgt;
- mindestens ein Gerät (202, 304) zwecks Einspeisung des erwähnten Reaktors (302) mit mindestens ein CO₂ Teil welches in erwähntem Brandgas (BG) vorhanden ist; und
- mindestens ein Gerät (306) zwecks Rückgewinnung von mindestens einem Teil des seitens des Mikroalgenreaktors hergestellten O₂ und dessen Wiederverwendung zwecks Erzeugung eines Teils des oxidierenden Gases.

## Revendications

1. Procédé de combustion de matières premières hydrocarbonées solides, liquides ou gazeuses (HC) dans un moteur thermique (100; 200) comprenant au moins une chambre de combustion (106), ledit procédé comprenant au moins une itération des étapes suivantes constituant un cycle de combustion au moyen de l'introduction dans la chambre de combustion (106) d'une charge de matières hydrocarbonées (HC) et d'un gaz oxydant, déclenchant la combustion de ladite charge de matières hydrocarbonées avec ledit gaz oxydant, **caractérisé en ce que** le gaz oxydant comprend uniquement du trioxygène (O₃) et du dioxyde de carbone (CO₂) et/ou du trioxyde de carbone (CO₃).

2. Procédé selon la revendication 1, **caractérisé en ce que** la charge de matières hydrocarbonées (HC) est mélangée à au moins un composant du gaz oxydant avant d'être introduite dans la chambre de combustion (106).

3. Procédé selon l'une quelconque des revendications précédentes, **caractérisé en ce que** le déclenchement de la combustion est réalisé par:
- application d'une pression dans la chambre de combustion (106); et/ou
- fourniture d'une énergie électrique à ladite chambre de combustion (106).

4. Procédé selon l'une quelconque des revendications précédentes, **caractérisé en ce que** le procédé comprend en outre une injection d'une quantité donnée d'eau liquide et/ou gazeuse (H₂O) dans le mélange.

5. Procédé selon l'une quelconque des revendications précédentes, **caractérisé en ce que** le gaz oxydant comprend entre 15 et 25% d'oxygène, sous forme de O₃ pur, et entre 85 et 75% de CO₂ et/ou de CO₃.

6. Procédé selon l'une quelconque des revendications précédentes, **caractérisé en ce que** le gaz oxydant comprend, pour une mole de carbone dans le matériau hydrocarboné, au moins une mole de CO₂ et/ou CO₃ et au maximum de 17 moles de CO₂ et/ou CO₃.

7. Procédé selon l'une quelconque des revendications précédentes, **caractérisé en ce qu'**il comprend la récupération du CO₂ présent dans les gaz de combustion (GC) obtenus après la combustion, au moyen d'un refroidissement dudit gaz de combustion (GC), et l'utilisation d'au moins une partie du CO₂, récupéré dans les gaz de combustion (GC), dans les gaz oxydants pour un nouveau cycle de combustion.

8. Procédé selon la revendication 7, **caractérisé en ce qu'**il consiste à utiliser une partie du CO₂ récupéré dans le gaz de combustion (GC) dans une culture de microalgues, ladite culture de microalgues fournissant de l'O₂ au moyen de la photosynthèse, au moins une partie dudit O₂ est utilisée pour obtenir les trioxydes, composant le gaz oxydant pour un nouveau cycle de combustion.

9. Procédé selon l'une quelconque des revendications précédentes, **caractérisé en ce qu'**il comprend une étape de génération de trioxyde (O₃) et de trioxyde de carbone (CO₃), par effet corona appliqué à des molécules de dioxygène (O₂) et respectivement à des molécules de dioxyde de carbone (CO₂).

10. Moteur thermique (100, 200) comprenant une chambre de combustion (106), **caractérisé en ce que** le moteur thermique comprend des moyens configurés pour exécuter le processus de combustion selon l'une quelconque des revendications 1 à 9, ledit moteur thermique comprenant au moins un module de réglage (114 , 116) pour la:
- quantité de CO₂ et/ou de CO₃; et
- quantité d'oxygène sous forme de O₃ pur;
utilisée dans un gaz oxydant,
ledit module de réglage étant configuré pour parcourir les étapes suivantes constituant un cycle de combustion au moyen de l'introduction dans la chambre de combustion (106) d'une charge de matières hydrocarbonées (HC) et du gaz oxydant, déclenchant la combustion de ladite charge de matières hydrocarbonées avec ledit gaz oxydant.

11. Système (300) pour produire de l'énergie à partir de matières hydrocarbonées (HC), **caractérisé en ce qu'**il comprend:
- un moteur thermique (100, 200) selon la revendication 10, fournissant un gaz de combustion (GC) comprenant du CO₂; et
- au moins un réacteur à microalgues (302) produisant de l'O₂ par photosynthèse;
- au moins un moyen (202, 304) pour alimenter ledit réacteur (302) avec au moins une partie du CO₂ présent dans ledit gaz de combustion (GC); et
- au moins un moyen (306) pour récupérer au moins une partie dudit O₂ produit par ledit réacteur à microalgues et le réutiliser pour générer une partie du gaz oxydant.
